# EUROPÄISCHE PATENTANMELDUNG

(11) **EP 4 026 800 A1**
(43) Veröffentlichungstag der Anmeldung: **13.07.2022**
(21) Anmeldenummer: 21150690.2
(22) Anmeldetag: 08.01.2021
(51) Int. Cl.: C01B 32/194, B82Y 30/00, B82Y 40/00, C08K 3/04

(54) **HOCH GEFÜLLTES TRANS-POLYOKTENAMER-GRAPHEN-VERBUNDMATERIAL, VERFAHREN ZU DESSEN HERSTELLUNG UND DESSEN VERWENDUNG**

(71) Anmelder: Evonik Operations GmbH, 45128 Essen (DE)
(72) Erfinder: Leich, Valeri, 47198 Duisburg (DE); Paasche, Alexander, 45768 Marl (DE); Schumann, Stefan, 42897 Remscheid (DE); Spannenkrebs, Dorothea, 45768 Marl (DE); Merkulov, Alexey, 45770 Marl (DE); Breuers, Verena, 45721 Haltern am See (DE)
(74) Vertreter: Evonik Patent Association

(57) **Zusammenfassung**

Die vorliegende Erfindung betrifft ein Verfahren zur Herstellung von trans-Polyoktenamer-Graphen-Verbundmaterial mit hohem Füllgrad, das hoch gefüllte trans-Polyoktenamer-Graphen-Verbundmaterial selbst und dessen Verwendung.

## Beschreibung

Die vorliegende Erfindung betrifft ein Verfahren zur Herstellung von trans-Polyoktenamer-Graphen-Verbundmaterial mit hohem Füllgrad, das hoch gefüllte trans-Polyoktenamer-Graphen-Verbundmaterial selbst und dessen Verwendung.

Über Graphen, dessen Herstellung, Eigenschaften und Anwendungen finden sich in der Fachliteratur ausführliche Abhandlungen, z.B. bei Römpp online, https://roempp.thieme.de/lexicon/RD-07-02758.

Analog zum Graphit ist jedes Kohlenstoff-Atom im Graphen über eine Sigma-Bindung mit 3 Nachbaratomen kovalent verknüpft. Der C,C-Bindungsabstand beträgt 142 pm. Die Atome sind sp²⁻hybridisiert, die Sigma-Bindungen liegen in einer Ebene. Demnach besitzt Graphen eine planare Struktur. An jedem Atom verbleibt ein teilgefülltes p_{z}-Orbital. Diese p_{z}-Orbitale stehen orthogonal zur Bindungsebene und formen ein delokalisiertes Pi-Elektronensystem, welches maßgeblich die elektronischen Eigenschaften des Graphens bestimmt.

Kristallographisch kann Graphen durch zwei äquivalente Subgitter mit den Vektoren der Einheitszelle a̅ = b̅ = 0,246 nm beschrieben werden, welche einen Zwischenwinkel von 60° aufspannen. Die Einheitszelle besteht aus 2 Kohlenstoff-Atomen jeweils an den Positionen (0, 0) und (a/3, 2b/3). Die Atomdichte beträgt damit 38,2 nm⁻².

Unter "Graphen-Material" wird im Rahmen der Erfindung Material oder Materialien gemäß ISO/TS 80004-13, nämlich
- Graphen,
- Graphenic carbon materials,
- Mono-, Bi- and Trilayer graphene,
- Epitaxial graphene,
- Exfoliated graphene,
- Few-layer graphene,
- Multi-layer graphene,
- Few-layered nanoribbons,
- Graphene nanoplate,
- Graphene nanoplatelet,
- Graphene nanosheet,
- Graphene microsheet,
- Graphene nanoflakes,
- Graphene nanoribbon,
- Graphene oxide,
- Graphene oxide nanosheet,
- Multi-layer graphene oxide,
- Graphene quantum dot,
- Graphite,
- Graphite nanoplate,
- Graphite nanosheet,
- Graphite nanoflake,
- Graphite oxide,
- Reduced graphene oxide,
und außerdem Ruße, Carbon nano-Tubes, oder ein Gemisch dieser Materialien verstanden.

Graphen-Materialien kommen in einer Vielzahl technischer Bereiche zur Anwendung.

In WO 2015/055252 A1 werden Vinylsilane offenbart, die in Graphen-Materialien aufweisenden Gummimischungen zum Beispiel bei der Herstellung von Reifen eingesetzt werden können.

Staub und Bakterien abweisende wässrige Beschichtungsmaterialien für Glastüren werden in CN 104342003 A vorgestellt. Bei der Herstellung dieser Beschichtungsmaterialien wird unter anderem Graphen eingesetzt.

Wie mechanische Eigenschaften von Asphalt durch eine Polyesterfasern und Graphen enthaltende Zusammensetzung verbessert werden können, lehrt CN 105056879 A.

Bei der Herstellung vulkanisierter Gummimischungen können Konzentrate eingesetzt werden, die neben anderen Materialien Graphen und Sulfonamide enthalten. Solche Konzentrate und deren Herstellverfahren sind in CN 107459717 A offenbart.

Auch zur Fäulnisverhütung in Baustoffen wird Graphen-Material eingesetzt. Entsprechend der Lehre von CN 108947394 A wird in Portland Zement neben anderen Materialien modifiziertes Graphenoxid eingearbeitet.

WO 2019/145307 A1 offenbart polymere, anorganische Nano-Partikel aufweisende Zusammensetzungen und deren Verwendung in Gleit- und Schmiermitteln auf metallischen Flächen. Als Nano-Partikel wird u.a. Graphen eingesetzt.

Graphen-Materialien sind kommerziell als Pulver erhältlich und besitzen oft sehr niedrige Schüttdichten, etwa im Bereich zwischen 2 und 400 g/l. Neben den geringen Schüttdichten weisen die meisten Graphen-Materialien auch eine schlechte Rieselfähigkeit auf bzw. entwickeln einen hohen Staubgehalt beim Schütten. Dies führt zu schlechter Handhabbarkeit, Problemen bei Einwaage und Dosierung und ist auch unter Gesichtspunkten des Umweltschutzes und der Arbeitssicherheit kritisch zu betrachten.

Die schlechte Handhabbarkeit zeigt sich beispielsweise bei der Einarbeitung der Pulver in elastomeren Systemen, wie es beim Kneten von Gummi der Fall ist: Um einen guten gefüllten Gummi-Compound herzustellen, kommt es auf den richtigen Zeitpunkt und die Zeitdauer der Einarbeitung von pulvrigen Füllstoffen an. Diese werden mittels Trichter in die Mischkammer geschüttet und dann durch einen pneumatischen Stempel in Richtung sich drehender Walzen gedrückt. Die bei einem solchen Mischprozess einwirkenden Scherkräfte brechen Agglomerate des Füllstoffes auf und tragen so zu seiner Verteilung bei. Der maximal erreichbare Füllgrad wird daher maßgeblich von den einwirkenden Scherkräften bestimmt.

Doch ist bei besonders weichen Polymermischungen mit geringer Viskosität das Erreichen bzw. Kontrollieren hoher Füllgrade schwer zu bewältigen, denn je geringer die Viskosität des Polymers oder der Polymermischung ist, desto geringer sind die Scherkräfte, die für die Realisierung gewünschter Füllgrade aufgebaut werden können. Einen Extremfall stellt die Kautschukklasse der Polyoctenamere dar. Diese weisen im Mischprozess eine derart geringe Viskosität auf, dass eine Verwendung als Basispolymer für gefüllte Mischungen nicht möglich ist.

Beispielsweise sind mit konventionellen Compoundiermethoden, typischerweise mittels Walzen, Innenmischer oder Extruder, maximal 75 % Füllgrad erreichbar. Dieser nach dem Wissen der Erfinder bislang höchste erreichte Füllgrad wird zum Beispiel mit Schwefel als Füllstoff realisiert. Gefüllte Polyoctenamere werden somit im heutigen Stand der Technik ausschließlich als Verschnittkomponente von Compounds eingesetzt.

Aufgabe der vorliegenden Erfindung war daher die Bereitstellung eines Verfahrens, mit welchem aus Polyoctenameren und einem Füllstoff ein Material hergestellt werden kann, das einstellbare, vorzugsweise hohe Füllgrade an diesem Füllstoff aufweist.

Überraschend wurde ein Verfahren gefunden, das mit Graphen-Material als Füllstoff diese Aufgabe löst.

Gegenstand der Erfindung ist ein Verfahren zur Herstellung von trans-Polyoktenamer-Graphen-Verbundmaterial, indem man die Schritte a - d ausführt:
a) trans-Polyoktenamer in zumindest einem organischen Lösungsmittel lösen, wobei eine Polymer-Lösung des trans-Polyoktenamer erhalten wird, und anschließend
b) in diese Polymer-Lösung Graphen-Material unter Eintragen von Leistung einbringen, wobei eine trans-Polyoktenamer-Graphen-Reaktionslösung erhalten wird, und anschließend
c) diese Reaktionslösung in zumindest einem weiteren Lösungsmittel ausfällen, oder
   das oder die im Schritt a eingesetzte oder eingesetzten Lösungsmittel durch Trocknen der Reaktionslösung entfernen, wobei ein Reaktionsprodukt erhalten wird, und anschließend
d) das Reaktionsprodukt trocknen,
wobei das trans-Polyoktenamer-Graphen-Verbundmaterial erhalten wird, oder indem man die Schritte e und f ausführt:
e) trans-Polyoktenamer einer ringöffnenden Metathesepolymerisation unterziehen, und anschließend oder gleichzeitig
f) Graphen-Material und zumindest ein Lösungsmittel und zumindest einen Katalysator auf Basis von Wolfram, Rhuthenium, und/oder Molybdän dazugeben,
wobei eine Reaktionslösung erhalten wird, die das trans-Polyoktenamer-Graphen-Verbundmaterial enthält.

Das erfindungsgemäße Verfahren hat den Vorteil, sehr einfach durchführbar zu sein und damit ein Verbundmaterial zu erzielen, das hoch gefüllt ist. Außerdem sind im Vergleich zur klassischen Kunststoff- und Kautschukcompoundiertechnik keine hohen Scherkräfte zur Herstellung des Verbundmaterials nötig. Dennoch werden außergewöhnlich hohe Füllgrade mit hoher Dispergiergüte erreicht.

Daher ist ebenfalls Gegenstand der Erfindung das trans-Polyoktenamer-Graphen-Verbundmaterial, gekennzeichnet durch
A) einen Füllgrad an Graphen-Material von 15 bis 99,9 Gew.-%, wobei der Füllgrad auf die Summe der Massenanteile trans-Polyoktenamer und Graphen-Material bezogen ist und die Summe 100 Gew.-% beträgt, und
B) eine Staubzahl von 0,002 bis 1 Gew.-%, falls der Füllgrad von 15 bis 70 Gew.-% beträgt, und/oder
C) unterdrückten und/oder zusätzlichen Absorptionsbanden im IR Absorptionsspektrum im Bereich von 500 - 1900 cm⁻¹ bezogen auf das IR Absorptionsspektrum jeweils des trans-Polyoctenamer und des Graphen-Materials, und/oder
D) eine Aufspaltung des Absorptionspeaks der der C=C Doppelbindung zugehörigen Schwingungsmoden in eine diskrete Feinstruktur im Wellenzahlen Bereich von 1300 bis 3900 cm⁻¹.

Es wird eine Peak-Feinstruktur Aufspaltung im IR Spektrum beobachtet. Ohne an eine Theorie gebunden zu sein, sind die Erfinder der Ansicht, dass zumindest einige Peaks zur C=C Doppelbindungsschwingung gehören, welche vermutlich im Verbundmaterial anders als im reinen Graphen-Material bzw. im TOR koppeln. Dadurch erscheint eine diskrete Feinstruktur im IR Absorptionsspektrum des Verbundmaterials.

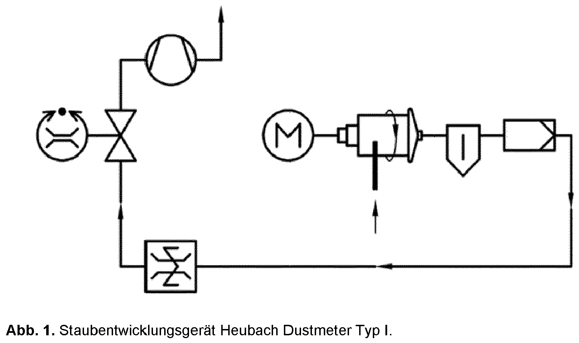

Die Staubzahl wird im Rahmen der Erfindung mit einem Staubentwicklungsgerät Heubach Dustmeter Typ I im Rotationsverfahren gemäß DIN 55992 (Ausgabe Juni 2006) bestimmt, schematisch gezeigt in **Abbildung 1****.** Die baulichen Einzelheiten dieses Gerätes sind dem Fachmann bekannt.

Das Resultat der Bestimmung der Staubzahl ist die Masse an Staub, die das Staubentwicklungsgerät bei Standardeinstellungen aus der Einwaage freisetzt. Im Rahmen der Erfindung sind die Standardeinstellungen laut DIN 55992-1 gewählt:
- 30 Umdrehungen/min
- 20 L/min Luftstrom
- 100 L
- 5 min

Die Einwaage kann beispielsweise das Graphen-Material sein, das in Schritt b oder f eingesetzt wird, oder die Einwaage kann das erfindungsgemäß hergestellte oder erfindungsgemäße trans-Polyoktenamer-Graphen-Verbundmaterial sein.

Die von dem Staubentwicklungsgerät aus der Einwaage bei Standardeinstellungen freigesetzte Masse an Staub wird auf die Einwaage bezogen und in Gew.-% angegeben.

Der Füllgrad wird im Rahmen der Erfindung gravimetrisch bestimmt, indem das erfindungsgemäße oder erfindungsgemäß hergestellte trans-Polyoktenamer-Graphen-Verbundmaterial in Toluol unter Rühren während 5 Stunden mittels Magnetrührer gelöst wird. Die so erhaltene Lösung wird über einen Büchnertrichter mit Papierfilter filtriert. Das auf dem Papierfilter zurück gehaltene Material weist Graphen-Material und Reste an Lösungsmittel auf. Dieses Material wird auf dem Papierfilter in einem Ofen bei 50 °C unter Umgebungsluft und Normaldruck bei 1013 hPa getrocknet und ausgewogen. Die so erhaltene und ausgewogene Masse wird auf die Summe der Massenanteile trans-Polyoktenamer und Graphen-Material bezogen und ist der in Gew.-% angegebene Füllgrad.

Dem erfindungsgemäßen oder erfindungsgemäß hergestellten trans-Polyoktenamer-Graphen-Verbundmaterial mit oben erwähnten hohen Füllgraden stehen erheblich interessantere technische Anwendungen offen, als bloßes Verschnittmaterial.

Ebenfalls Gegenstand der Erfindung ist somit die Verwendung des erfindungsgemäßen oder erfindungsgemäß erhaltenen trans-Polyoktenamer-Graphen-Verbundmaterials im Automobilbereich, bei Wärmetauschern, in Gehäusen, Verkapselungen, Gleitlagern, in 3D-Druckköpfen zur Wärmeabführung, Spritzgussbauteilen, Elektronikanwendungen, Schlauchsystemen, Membranen, Brennstoffzellen, Kabelsystemen, Bekleidung im Indoor und Sportbereich, EM-Schutz, Orthopädie.

Die Erfindung wird im Folgenden näher erläutert.

Im Rahmen der Erfindung wird trans-Polyoktenamer mit "TOR" abgekürzt. Ein Handelsname für TOR ist Vestenamer^{®}, erhältlich bei Evonik Operations GmbH, Essen.

Im Schritt a des erfindungsgemäßen Verfahrens kann das organische Lösungsmittel ausgewählt sein aus Hexan, Chlorbenzol, Toluol, Tetrachlormethan, Dichlormethan oder einem Gemisch dieser Lösungsmittel. Zusätzlich oder alternativ kann die Lösung während einer Zeitdauer vorzugsweise von 0,1 bis 1 Stunde durch Rühren hergestellt werden.

Es kann vorteilhaft sein, das organische Lösungsmittel unter gleichzeitiger Eintragung von Leistung einzubringen. Weiterhin ist es bevorzugt, während der Herstellung der Polymer-Lösung des trans-Polyoktenamer im Schritt a zu thermostatisieren, indem unerwünschte Wärme abgeleitet wird. Im Allgemeinen sind alle organischen Lösungsmittel geeignet, die unpolar sind. Solche Lösungsmittel sind dem Fachmann bekannt.

Das Eintragen von Energie im Schritt b bricht die Aggregate des Graphen-Materials auf. Dadurch erhaltene Bruchstücke werden mit dem trans-Polyoktenamer überzogen. Somit wird die trans-Polyoktenamer-Graphen-Reaktionslösung erhalten.

Es kann vorteilhaft sein, im Schritt b des erfindungsgemäßen Verfahrens das Graphen-Material in die Polymer-Dispersion unter Einsatz von Hilfsmitteln ausgewählt aus Ultraschall, Perlmühle, Dispermat, Kneter, Extruder, Dreiwalzen-Stuhl, Ultra Turrax, Wet-Jet Mühle, Conchier-Apparatur, Hochscher-Mischer, bevorzugt Highspeed-Mixer, Hochgeschwindigkeitsmischer, Thermomixer, oder einer Kombination dieser Hilfsmittel einzubringen, und/oder unter Eintragen von Leistung in Form von Wärmeenergie, Mikrowellenstrahlung, und/oder Infrarotstrahlung, wobei diese Energie mit einer massenspezifischen Leistung von 10 bis 400 W/kg, wobei die Masse die Summe aus Polymer-Dispersion und Graphen-Material ist, und wobei die Leistung während 0,1 bis 99 Stunden, bevorzugt während 0,1 - 6 Stunden, besonders bevorzugt während 3 bis 6 Stunden eingetragen wird.

Werden mehrere Energieformen eingesetzt, wird im Rahmen der Erfindung unter Leistung die Summe der Leistungen eingetragener Energien verstanden.

Im Schritt b kann es ebenfalls vorteilhaft sein, unerwünschte Wämeenergie abzuführen, die abhängig vom Ausgangszustand des eingebrachten Graphen-Materials entsteht. Das Graphen-Material kann beispielsweise als Pulver oder Pellet vorliegen. Entsprechende Maßnahmen der Thermostatisierung sind dem Fachmann bekannt.

Vorzugsweise beträgt in dem Verfahren der Gewichtsanteil Graphen-Material von 99 - 1 Gew.-% und der Gewichtsanteil trans-Polyoktenamer von 1 - 99 Gew.-%, wobei die Summe der Gewichtsanteile 100 Gew.-% ist.

Im Schritt c des erfindungsgemäßen Verfahrens kann die Reaktionslösung in einem polaren Lösungsmittel ausgefällt werden, vorzugsweise mittels Alkohol oder Wasser, besonders bevorzugt mittels Methanol oder Ethanol, ganz besonders bevorzugt mittels Ethanol, und/oder das oder die im Schritt a eingesetzten organischen Lösungsmittel können mittels Unterdruck, vorzugsweise unter Vakuum, entfernt werden.

Es ist ebenfalls bevorzugt, das im Schritt a eingesetzte organische Lösungsmittel unter Umgebungsbedingungen (20 °C, 1013 hPa) verdampfen zu lassen. Weiterhin kann es vorteilhaft sein, das im Schritt a eingesetzte organische Lösungsmittel mittels Gefriertrocknung zu entziehen. Alternativ kann auch flüssiger Stickstoff oder Trockeneis, vorzugsweise Trockeneis eingesetzt werden. Dabei kann ein Kryomahlverfahren angewandt werden.

Im Schritt d des erfindungsgemäßen Verfahrens kann das Reaktionsprodukt unter Vakuum oder mittels Sprühtrocknung oder in Umgebungsluft oder Heizofen getrocknet werden. Dadurch werden etwa noch vorhandene Lösungsmittel entfernt. Trocknungsmittel sind vorzugsweise Kieselsäuren oder Silica.

Die ringöffnende Metathesepolymerisation im Schritt e des Verfahrens ist dem Fachmann bekannt. Sie ist ausführlich in der Dissertation von Melanie Anselm, Universität Freiburg, erläutert: "Polyethylen- und Polyoctenamer-Nanokomposite durch katalytische Polymerisation in Gegenwart von funktionalisierten Graphenen", 2012, Deutsche Nationalbibliothek, Order Nr. 1123472696. Diese ringöffnende Metathesepolymerisation wird im Rahmen der Erfindung mit "ROMP" abgekürzt.

In dem Schritt f des erfindungsgemäßen Verfahrens kann das Lösungsmittel ausgewählt sein aus Benzol, Hexan, Heptan, Oktan, Toluol, Cyclohexan, Methylcaclohexan, Isopropylcyclohexan, Paraffinöl, Methylchlorid, Trichlorethylen, Perchlorethylen, Petroleum, zyklische Olefinmonomere, Decalin, Kerosin, entschwefeltes Kerosin, oder ein Gemisch dieser Lösungsmittel. Besonders bevorzugt kann oder können Cycloocten, Cyclooctadien eingesetzt werden. Zusätzlich oder alternativ kann der Katalysator ausgewählt sein aus Wolfram-Katalysator, vorzugsweise Schrock-Katalysator, oder auf Ruthenium basierenden Katalysator, vorzugsweise Grubbs-Hoveyda.

Falls in dem erfindungsgemäßen Verfahren die Schritte e und f durchgeführt werden, kann nach oder während der Durchführung der ringöffnenden Metathesepolymerisation von 1 bis 99 Gew.-% Graphen-Material, besonders bevorzugt von 50 bis 90 Gew.-%, ganz besonders bevorzugt von 70 bis 90 Gew.-% Graphen-Material eingesetzt werden, wobei die Gewichtsanteile auf das nach der ROMP erhaltene Produkt oder Produktgemisch und das Graphen-Material bezogen sind, deren Summe 100 Gew.-% beträgt.

Besonders bevorzugt können im Schritt f solche Lösungsmittel eingesetzt werden, bei denen die Löslichkeit des trans-Polyoktenamers genutzt wird. Solche Lösungsmittel sind dem Fachmann bekannt. Der Schritt f kann batchweise durchgeführt werden.

Das erfindungsgemäße trans-Polyoktenamer-Graphen-Verbundmaterial ist gekennzeichnet durch
A) einen Füllgrad an Graphen-Material von 15 bis 99,9 Gew.-%, wobei der Füllgrad auf die Summe der Massenanteile trans-Polyoktenamer und Graphen-Material bezogen ist und die Summe 100 Gew.-% beträgt, und
B) eine Staubzahl von 0,002 bis 1 Gew.-%, falls der Füllgrad von 15 bis 70 Gew.-% beträgt, und/oder
C) unterdrückte und/oder zusätzliche Absorptionsbande im IR Absorptionsspektrum im Bereich von 500 - 1900 cm⁻¹ bezogen auf das IR Absorptionsspektrum jeweils des trans-Polyoctenamer und des Graphen-Materials, und/oder
D) eine Aufspaltung des Absorptionspeaks der der C=C Doppelbindung zugehörigen Schwingungsmoden in eine diskrete Feinstruktur im Wellenzahlen Bereich von 1300 bis 3900 cm⁻¹.

Vorzugsweise tritt die Feinstruktur des erfindungsgemäßen trans-Polyoktenamer-Graphen-Verbundmaterials im Merkmal D bei Wellenzahlen von 1300 bis 2100 cm⁻¹ und von 3650 bis 3900 cm⁻¹ auf, besonders bevorzugt im Bereich von 1300 bis 2100 cm⁻¹.

Vorzugsweise kann das erfindungsgemäße oder erfindungsgemäß hergestellte trans-Polyoktenamer-Graphen-Verbundmaterial einen Füllgrad von 15 bis 99,9 Gew.-%, weiterhin bevorzugt von 15 bis 70 Gew.-%, weiterhin bevorzugt von 30 bis 99,9 Gew.-%, weiterhin bevorzugt von 50 bis 99,9 Gew.-%, weiterhin bevorzugt von 75,1 bis 99,9 Gew.-%, besonders bevorzugt von 15 bis 70 Gew.-% aufweisen.

Es kann vorteilhaft sein, wenn das erfindungsgemäße oder erfindungsgemäß hergestellte trans-Polyoktenamer-Graphen-Verbundmaterial eine Staubzahl im Bereich von 0,004 bis 0,01 Gew.-% bei einem Füllgrad von 15 bis 70 Gew.-% aufweist.

Das IR Absorptionsspektrum des erfindungsgemäßen oder erfindungsgemäß erhaltenen trans-Polyoktenamer-Graphen-Verbundmaterials wird bezogen auf das Graphen-Material, welches eingesetzt ist im Schritt b oder f, und bezogen auf das trans-Polyoktenamer, eingesetzt in dem Schritt a oder e.

Vorzugsweise weist das IR Absorptionsspektrum des erfindungsgemäßen oder erfindungsgemäß erhaltenen Verbundmaterials zusätzliche Absorptionsbande im Bereich von 1500 bis 1650 cm⁻¹ und/oder im Bereich von 1700 bis 1800 cm⁻¹ auf.

Weiterhin bevorzugt weist das IR Absorptionsspektrum des erfindungsgemäßen oder erfindungsgemäß erhaltenen Verbundmaterials unterdrückte Absorptionsbande im Bereich von 1000 bis 1400 cm⁻¹ auf.

Besonders bevorzugt weist dieses Verbundmaterial unterdrückte Absorptionsbande im Bereich von 1000 bis 1400 cm⁻¹ auf und zusätzliche Absorptionsbande im Bereich von 1500 bis 1650 cm⁻¹ und im Bereich von 1700 bis 1800 cm⁻¹ auf.

Gegenstand der Erfindung ist ebenfalls die Verwendung des erfindungsgemäßes oder erfindungsgemäß erhaltenen trans-Polyoktenamer-Graphen-Verbundmaterials im Automobilbereich, bei Wärmetauschern, in Gehäusen, Verkapselungen, Gleitlagern, in 3D-Druckköpfen zur Wärmeabführung, in Spritzgussbauteilen, Elektronikanwendungen, Schlauchsystemen, Membranen, Brennstoffzellen, Kabelsystemen, Bekleidung im Indoor und Sportbereich, beim EM-Schutz, in der Orthopädie.

Bevorzugte Verwendungsmöglichkeiten sind in thermoplastischen Kunststoffen, ausgewählt aus Standard-Thermoplaste, vorzugsweise PE, PP, PS, PVC, alpha-Olefine, Butadien-Derivate, in technischen Thermoplasten, vorzugsweise PET, PMMA, PC, POM, PA, PC, PBT, PEBA, TPU, PU, TPE, in Hochleistungs-Thermoplasten, vorzugsweise PPS, PEEK, PES, PI, PEI, in Copolymerisaten, Elastomeren, vorzugsweise Siliconen, weiter bevorzugt RTV, HTV, LSR, HCR, Acrylate, poly- und Oligosiloxane enthaltende Paste, in Polyurethanen, Kautschuken, vorzugsweise SBR, BR, Naturkautschuk, Polybutadien, funktionalisierte Polybutadiene, thermoplastisches Polyurethan, in Duromeren, vorzugsweise Polyurethanen, Polyesterharzen, Phenolharzen, Epoxidharzen, Acrylatharzen, Silikonharzen, in Lösungsmitteln, vorzugsweise aprotisch-unpolaren, aprotisch-polaren, protischen Lösungsmitteln, in Ölen, vorzugsweise Mineralölen, Silikonölen, Prozessierölen.

Die Erfindung wird im Folgenden beispielhaft erläutert.

### Beispiel 1. Trans-Polyoktenamer-Graphen-Verbundmaterial aus TOR und Graphen-Nanoplatelets

Es wurden verschiedene trans-Polyoktenamer-Graphen-Verbundmaterialien hergestellt, indem zunächst trans-Polyoktenamer in Toluol gelöst wurde. Alternativ und mit den gleichen Resultaten konnte das Beispiel auch mit Hexan durchgeführt werden.

Anschließend wurden verschiedene Anteile an Graphen-Nanoplatelets eingebracht, wobei jeweils eine trans-Polyoktenamer-Graphen-Reaktionslösung erhalten wurde.

Anschließend wurde unter Eintragen von Leistung mittels einer Ultraschallsonotrode, wobei diese Energie mit einer massenspezifischen Leistung von 10 bis 400 W/kg konstant eingetragen wurde, gerührt.

Anschließend wurden diese Reaktionslösungen jeweils in Ethanol ausgefällt, und das jeweils erhaltene Reaktionsprodukt getrocknet, wobei jeweils trans-Polyoktenamer-Graphen-Verbundmaterial erhalten wurde. Alternativ und mit den gleichen Resultaten konnte das Beispiel auch mit dem Methanol durchgeführt werden.

Anschließend wurde der Füllgrad des jeweils erfindungsgemäß erhaltenen Verbundmaterials, in der Tabelle 1 als "TOR-GBM Masterbatch" bezeichnet, bei den verschiedenen Gewichtsanteilen an TOR und Graphen-Material bestimmt, indem jeweils das trans-Polyoktenamer-Graphen-Verbundmaterial in Toluol unter Rühren während 5 Stunden mittels Magnetrührer gelöst wurde. Die jeweils erhaltene Lösung wurde über einen Büchnertrichter mit Papierfilter filtriert. Das auf dem Papierfilter zurück gehaltene Material wies Graphen-Material und Reste an Lösungsmittel auf. Dieses Material wurde auf dem Papierfilter in einem Ofen bei 50 °C unter Umgebungsluft und Normaldruck bei 1013 hPa getrocknet und ausgewogen. Der Füllgrad errechnete sich aus dem prozentualen Gewichtsanteil der so erhaltenen und ausgewogenen Masse an der Summe der Massenanteile trans-Polyoktenamer und Graphen-Material.

Die Resultate zeigt Tabelle 1.

**Tabelle 1. trans-Polyoktenamer-Graphen-Verbundmaterial "TOR-GBM Masterbatch" mit verschiedenen Füllgraden.**

| **Versuch** | **TOR:Graphen-Material (Gew.-%)** | **TOR-GBM Masterbatch (g)** | **Auswaage GBM (g)** | **Füllgrad (Gew.-%)** |
|---|---|---|---|---|
| | | | | |
| **39** | **90:10** | **1,0015** | **0,1487** | **15** |
| **46** | **70 : 30** | **1,0302** | **0,3398** | **33** |
| **34** | **50 : 50** | **0,9986** | **0,5461** | **55** |
| **47** | **30 : 70** | **1,0325** | **0,7736** | **75** |
| **48** | **10:90** | **1,0064** | **0,9408** | **94** |
| **49** | **5:95** | **0,9923** | **0,9936** | **99,9** |

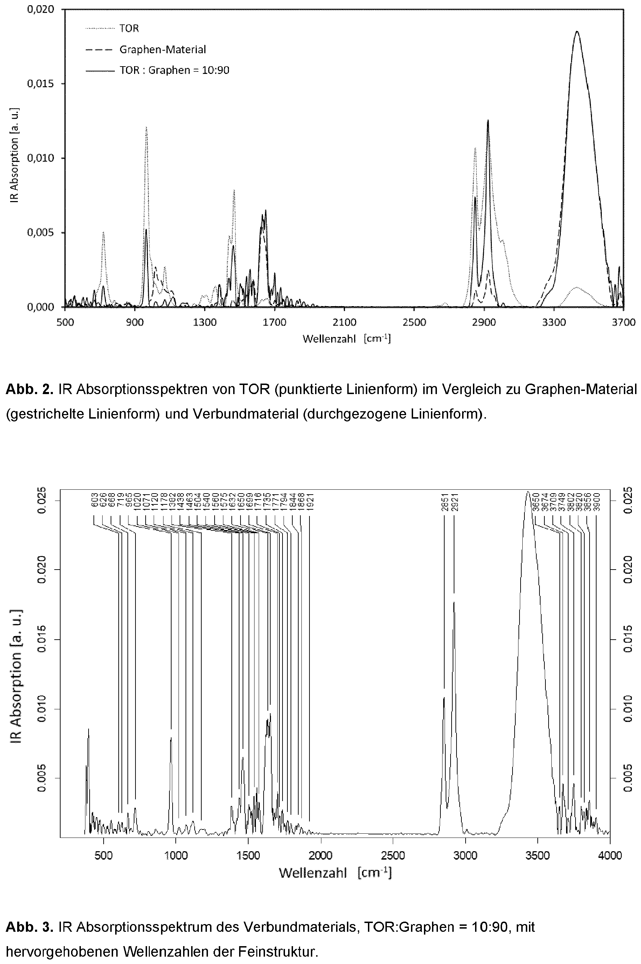

Die **Abbildung 2** zeigt die IR Absorptionsspektren als Funktion der Wellenzahl, und zwar von TOR in punktierter Linie, des Graphen-Materials in gestrichelter Linie bzw. des erfindungsgemäßen Verbundmaterials im Falle des Verhältnisses TOR:Graphen von 10:90 in durchgezogener Linie.

Die **Abbildung 3** zeigt das gleiche IR Absorptionsspektrum wie **Abb. 2****,** jedoch ausschließlich des erfindungsgemäßen Verbundmaterials im Falle des Verhältnisses TOR:Graphen von 10:90, wobei die Wellenzahlen der diskreten Feinstruktur in den Bereichen von 1382 bis 1921 cm⁻¹ und 3650 bis 3900 cm⁻¹ hervorgehoben sind.

## Patentansprüche

1. Verfahren zur Herstellung von trans-Polyoktenamer-Graphen-Verbundmaterial,
indem man die Schritte a - d ausführt:
a) trans-Polyoktenamer in zumindest einem organischen Lösungsmittel lösen, wobei eine Polymer-Lösung des trans-Polyoktenamer erhalten wird, und anschließend
b) in diese Polymer-Lösung Graphen-Material unter Eintragen von Leistung einbringen, wobei eine trans-Polyoktenamer-Graphen-Reaktionslösung erhalten wird, und anschließend
c) diese Reaktionslösung in zumindest einem weiteren Lösungsmittel ausfällen, oder
das oder die im Schritt a eingesetzte oder eingesetzten Lösungsmittel durch Trocknen der Reaktionslösung entfernen,
wobei ein Reaktionsprodukt erhalten wird, und
anschließend
d) das Reaktionsprodukt trocknen,
wobei das trans-Polyoktenamer-Graphen-Verbundmaterial erhalten wird,
oder indem man die Schritte e und f ausführt:
e) trans-Polyoktenamer einer ringöffnenden Metathesepolymerisation unterziehen, und anschließend oder gleichzeitig
f) Graphen-Material und zumindest ein Lösungsmittel und zumindest einen Katalysator auf Basis von Wolfram, Rhuthenium, und/oder Molybdän dazugeben, wobei eine Reaktionslösung erhalten wird,
die das trans-Polyoktenamer-Graphen-Verbundmaterial enthält.

2. Verfahren nach Anspruch 1, wobei im Schritt a das organische Lösungsmittel ausgewählt ist aus Hexan, Chlorbenzol, Toluol, Tetrachlormethan, Dichlormethan oder einem Gemisch dieser Lösungsmittel, und/oder die Lösung während einer Zeitdauer vorzugsweise von 0,1 bis 1 Stunde durch Rühren hergestellt wird.

3. Verfahren nach einem der Ansprüche 1 oder 2, wobei im Schritt b das Graphen-Material in die Polymer-Dispersion
unter Einsatz von Hilfsmitteln ausgewählt aus
Ultraschall, Perlmühle, Dispermat, Kneter, Extruder, Dreiwalzen-Stuhl, Ultra Turrax, Wet-Jet Mühle, Conchier-Apparatur, Hochscher-Mischer, bevorzugt Highspeed-Mixer, Hochgeschwindigkeitsmischer, Thermomixer, oder einer Kombination dieser Hilfsmittel eingebracht wird, und/oder
unter Eintragen von Leistung in Form von Wärmeenergie, Mikrowellenstrahlung, und/oder Infrarotstrahlung, wobei diese Energie
mit einer massenspezifischen Leistung von 10 bis 400 W/kg, wobei die Masse die Summe aus Polymer-Dispersion und Graphen-Material ist,
und wobei die Leistung während 0,1 bis 99 Stunden, bevorzugt während 0,1 - 6 Stunden, besonders bevorzugt während 3 bis 6 Stunden
eingetragen wird.

4. Verfahren nach Anspruch 3, wobei der Gewichtsanteil Graphen-Material von 99 - 1 Gew.-% und der Gewichtsanteil trans-Polyoktenamer von 1 - 99 Gew.-% beträgt, wobei die Summe der Gewichtsanteile 100 Gew.-% ist.

5. Verfahren nach einem der vorhergehenden Ansprüche, wobei im Schritt c die Reaktionslösung in einem polaren Lösungsmittel ausgefällt wird, vorzugsweise mittels Alkohol oder Wasser ausgefällt wird, besonders bevorzugt mittels Methanol oder Ethanol, ganz besonders bevorzugt mittels Ethanol,
und/oder das oder die im Schritt a eingesetzten organischen Lösungsmittel mittels Unterdruck, vorzugsweise unter Vakuum, entfernt wird oder werden.

6. Verfahren nach einem der vorhergehenden Ansprüche, wobei im Schritt d das Reaktionsprodukt unter Vakuum oder mittels Sprühtrocknung oder in Umgebungsluft oder Heizofen getrocknet wird.

7. Verfahren nach Anspruch 1, wobei im Schritt f das Lösungsmittel ausgewählt ist aus Benzol, Hexan, Heptan, Oktan, Toluol, Cyclohexan, Methylcaclohexan, Isopropylcyclohexan, Paraffinöl, Methylchlorid, Trichlorethylen, Perchlorethylen, Petroleum, zyklische Olefinmonomere, Decalin, Kerosin, entschwefeltes Kerosin, oder ein Gemisch dieser Lösungsmittel, besonders bevorzugt Cycloocten, Cyclooctadien, und/oder der Katalysator ausgewählt ist aus Wolfram-Katalysator, vorzugsweise Schrock-Katalysator, oder auf Ruthenium basierenden Katalysator, vorzugsweise Grubbs-Hoveyda.

8. Verfahren nach Anspruch 7, wobei nach der Durchführung oder während der ringöffnenden Metathesepolymerisation von 1 bis 99 Gew.-% Graphen-Material, besonders bevorzugt von 50 bis 90 Gew.-%, ganz besonders bevorzugt von 70 bis 90 Gew.-% Graphen-Material eingesetzt wird, und die Gewichtsanteile auf das nach der ROMP erhaltene Produkt oder Produktgemisch und das Graphen-Material bezogen sind, deren Summe 100 Gew.-% beträgt.

9. trans-Polyoktenamer-Graphen-Verbundmaterial, **gekennzeichnet durch**
A) einen Füllgrad an Graphen-Material von 15 bis 99,9 Gew.-%, wobei der Füllgrad auf die Summe der Massenanteile trans-Polyoktenamer und Graphen-Material bezogen ist und die Summe 100 Gew.-% beträgt, und
B) eine Staubzahl von 0,002 bis 1 Gew.-%, falls der Füllgrad von 15 bis 70 Gew.-% beträgt, und/oder
C) unterdrückten und/oder zusätzlichen Absorptionsbanden im IR Absorptionsspektrum im Bereich von 500 - 1900 cm⁻¹ bezogen auf das IR Absorptionsspektrum jeweils des trans-Polyoctenamer und des Graphen-Materials, und/oder
D) eine Aufspaltung des Absorptionspeaks der der C=C Doppelbindung zugehörigen Schwingungsmoden in eine diskrete Feinstruktur im Wellenzahlen Bereich von 1300 bis 3900 cm⁻¹.

10. trans-Polyoktenamer-Graphen-Verbundmaterial nach Anspruch 9, **gekennzeichnet durch** einen Füllgrad von 15 bis 99,9 Gew.-%, vorzugsweise von 15 bis 70 Gew.-%, weiterhin bevorzugt von 30 bis 99,9 Gew.-%, weiterhin bevorzugt von 50 bis 99,9 Gew.-%, weiterhin bevorzugt von 75,1 bis 99,9 Gew.-%, besonders bevorzugt von 15 bis 70 Gew.-%.

11. Verwendung des trans-Polyoktenamer-Graphen-Verbundmaterials gemäß Anspruch 9 oder 10 im Automobilbereich, bei Wärmetauschern, in Gehäusen, Verkapselungen, Gleitlagern, in 3D-Druckköpfen zur Wärmeabführung, Spritzgussbauteilen, Elektronikanwendungen, Schlauchsystemen, Membranen, Brennstoffzellen, Kabelsystemen, Bekleidung im Indoor und Sportbereich, EM-Schutz, Orthopädie.

12. Verwendung nach Anspruch 11 in thermoplastischen Kunststoffen, ausgewählt aus Standard-Thermoplaste, vorzugsweise PE, PP, PS, PVC, alpha-Olefine, Butadien-Derivate,
in technischen Thermoplasten,
vorzugsweise PET, PMMA, PC, POM, PA, PC, PBT, PEBA, TPU, PU, TPE,
in Hochleistungs-Thermoplasten,
vorzugsweise PPS, PEEK, PES, PI, PEI,
in Copolymerisaten, Elastomeren,
vorzugsweise Siliconen, weiter bevorzugt RTV, HTV, LSR, HCR, Acrylate, poly- und Oligosiloxane enthaltende Paste,
in Polyurethanen, Kautschuken,
vorzugsweise SBR, BR, Naturkautschuk, Polybutadien, funktionalisierte Polybutadiene, thermoplastisches Polyurethan,
in Duromeren,
vorzugsweise Polyurethanen, Polyesterharzen, Phenolharzen, Epoxidharzen, Acrylatharzen, Silikonharzen,
in Lösungsmitteln,
vorzugsweise aprotisch-unpolaren, aprotisch-polaren, protischen Lösungsmitteln,
in Ölen,
vorzugsweise Mineralölen, Silikonölen, Prozessierölen.
